# FASCICULE DE BREVET EUROPEEN

(11) **EP 2 525 457 B1**
(45) Date de publication et mention de la délivrance du brevet: **22.07.2015**
(21) Numéro de dépôt: 12168461.7
(22) Date de dépôt: 18.05.2012
(51) Int. Cl.: H02G 3/04, H02G 3/30

(54) **Dispositif de fixation d'un tronçon de chemin de câbles sur un support, chemin de câbles comprenant un tel dispositif et procédé d'assemblage du chemin de câbles**
Vorrichtung zum Befestigen eines Abschnitts eines Kabelbaums auf einer Halterung, Kabelbaum, der eine solche Vorrichtung umfasst, und Verfahren zum Zusammenbau eines solchen Kabelbaums
Device for attaching a cable-tray section to a bracket, cable tray including such a device and method for assembling the cable tray

(30) Priorité: 19.05.2011 FR 1101556
(43) Date de publication de la demande: 21.11.2012
(73) Titulaire: Niedax France, 62400 Bethune (FR)
(72) Inventeur: Loyer, Thierry, 62404 BETHUNE (FR)
(74) Mandataire: Demulsant, Xavier

(56) Documents cités:
- EP-A1- 0 112 753
- EP-A1- 1 429 040
- DE-A1- 19 722 810
- DE-A1- 19 726 500
- DE-U- 1 949 798
- DE-U1- 20 021 918

## Description

L'invention a trait au domaine des chemins de câbles, et plus précisément au domaine de l'assemblage des tronçons de chemins de câbles sur leur support.

Un chemin de câbles est une structure employée principalement pour supporter des câbles, mais également pour supporter des tuyaux, ou tout élément similaire, dans un bâtiment, à usage aussi bien professionnel que domestique.

Le chemin de câbles comprend en général une pluralité de tronçons, fixés sur un support, dans lesquels sont posés les câbles. Un tronçon se présente sous la forme d'un profilé, en général d'une longueur de trois mètre environ, de section transversale en forme par exemple de U, de C, de G, ou encore de Ω.

Il existe différents types de tronçons, dont les deux plus courants sont :
- le tronçon en treillis de fils : le tronçon est formé par association de fils dits de chaîne, s'étendant suivant la direction d'élancement du tronçon, et de fils dits de trame, reliant transversalement les fils de chaîne. Les fils de trame sont pliés et fixés, par exemple par soudure, aux fils de chaîne;
- le tronçon en tôle : le tronçon est formé à partir d'une feuille de tôle selon la forme voulue, et est éventuellement découpé pour former des ouvertures qui serviront à fixer des accessoires sur le tronçon.

Les tronçons sont généralement métalliques, mais peuvent être formés en tout autre matériaux, par exemple plastique. Les tronçons peuvent subir un traitement ultérieur, dépendamment de l'environnement dans lequel ils sont destinés à être placés. Ainsi, les chemins de câbles métalliques peuvent subir en particulier une galvanisation, un zingage, être plastifiés ou encore être revêtus d'une couche d'époxy.

Les tronçons sont assemblés les uns aux autres pour définir la trajectoire à suivre par les câbles en les aboutant et en les fixant les uns aux autres. On connaît différentes techniques pour assembler les tronçons ensemble.

Par exemple, les tronçons sont assemblés les uns aux autres au moyen d'un système de type vis écrou. Pour les tronçons en treillis de fils, deux fils de trame aboutés peuvent être enserrés de deux côtés, par exemple par deux pièces maintenues ensemble par une vis les traversant ou par une pièce et la tête d'une vis, la vis assurant le serrage. Les documents EP 0 617 493 (RIETH), DE 2 036 325 (BETTERMANN), EP 1 337 019 (LEGRAND) ou encore FR 2 858 129 (CES) présentent des exemples d'assemblage par un tel système.

On connaît également l'assemblage au moyen d'une pièce de liaison élastique, appelée éclisse, fixée par déformation élastique sur deux tronçons aboutés. Les documents FR 2711 203 (METAL DEPLOYE), FR 2 698 416 (TOLATOIS), EP 0 905 843 (OBO BETTERMANN), US 7,452,157 (ICM) ou FR 2 395 449 (EBO) décrivent des exemples d'éclisses élastiques.

Enfin, on peut également citer l'assemblage par déformation d'une éclisse au moyen d'un outil, permettant par exemple de rabattre des ailes de l'éclisse contre les tronçons aboutés, comme présenté dans les documents US 6,061,884 (GS METAL), EP 1 437 812 (MIRAI KOGYO) ou encore US 2006/0249300 (CES).

Eventuellement, des accessoires tels que des couvercles, des cornières de séparation ou des colliers peuvent être associés aux tronçons.

Les tronçons sont assemblés sur un support pour former le chemin de câbles. Les supports peuvent être montés en porte à faux directement sur une paroi ou sur un montant ou pendard. Le montant, comme le pendard, sont des structures généralement verticales, permettant au support de s'étendre horizontalement pour y fixer les tronçons. Les supports se présentent sous différentes variantes, et sont ainsi connus sous les noms de semelle, de bras de console, de rails ou encore de balancelle lorsqu'ils sont destinés à être fixés en suspension par exemple sur un plafond.

L'assemblage des tronçons sur leur support doit répondre à de hautes exigences de tenue mécanique, et en particulier vis-à-vis des contraintes à la fois statiques, dues principalement au poids des câbles placés dans les tronçons, et à la fois dynamiques, dues par exemple aux mouvements sismiques qui peuvent se produire sur le lieu de l'installation du chemin de câbles.

Le document EP 1 335 464 (LEGRAND) propose de fixer un tronçon de chemins de câbles en treillis de fils sur un support comprenant des ouvertures oblongues. A cet effet, on utilise une pièce de fixation munie d'une queue insérée dans une ouverture oblongue et venant en appui sous le support, tandis qu'une patte vient appuyer sur un fil du tronçon pour le maintenir sur le support. Un système vis écrou, placé dans l'ouverture et la patte de la pièce de fixation permet de maintenir la pièce contre le support.

Le document GB 2 459 007 (SCHNEIDER) propose d'utiliser également une pièce bloquant des fils d'un tronçon entre des ailes, la pièce étant à son tour fixée sur le support au moyen d'un système vis écrou.

De telles solutions se révèlent insuffisantes. En effet, en impliquant l'utilisation de vis et d'écrous, les pièces de fixation se révèlent fastidieuses à mettre en place. En outre, le stockage des pièces avec les vis et écrous est plus coûteux. Enfin, les jeux induits par l'utilisation de vis et d'écrous ne permettent pas d'assurer une résistance optimale aux contraintes devant être supportées par les tronçons

Il a ainsi été proposé des solutions n'impliquant pas de vis ni d'écrous.

Par exemple, le document EP 1 039 198 (VERGOKAN) décrit une pièce élastique comprenant deux ailes formant un V, pouvant être insérées par déformation de l'angle du V dans une ouverture du support pour se bloquer sous le support. La pièce comprend en outre deux pattes prolongeant chacune une aile, les deux pattes formant logement pour un fil d'un tronçon et le maintenir sur le support.

Le document EP 1 599 925 (ICM) propose un principe similaire à celui donné dans le document EP 1 039 198. Ainsi, une pièce comprend une âme centrale munie d'un logement pour maintenir un fil du tronçon sur le support, la pièce comprenant en outre des pattes à insérer dans des ouvertures du support.

Le document DE 19 726 500 (DEFEM), décrivant les caractéristiques du préambule de la revendication 1, présente un moyen de fixation d'une cloison interne de chemin de câbles, ce moyen pouvant également servir à la solidarisation d'un tronçon de chemins de câbles sur un support.

Les performances mécaniques de telles pièces se révèlent insuffisantes. De plus, la mise en place de la pièce nécessite d'ajuster la position du tronçon par rapport à l'ouverture du support, rendant cette étape délicate et fastidieuse.

Il existe donc un besoin pour un nouveau dispositif de fixation des tronçons de chemin de câbles sur leur support.

Un premier objet de l'invention est de proposer un dispositif de fixation des tronçons de chemin de câbles sur leur support permettant un assemblage rapide, sans outillage, des tronçons sur leur support.

Un deuxième objet de l'invention est de proposer un dispositif de fixation des tronçons de chemin de câbles sur leur support répondant aux exigences de tenues mécaniques, aussi bien vis-à-vis des contraintes statiques que des contraintes dynamiques.

Un troisième objet de l'invention est de proposer un dispositif de fixation des tronçons de chemin de câbles sur leur support de fabrication et de stockage à faible coût.

Un quatrième objet de l'invention est de proposer un dispositif de fixation des tronçons de chemin de câbles sur leur support n'impliquant pas de position particulière des tronçons sur leur support.

A cet effet, selon un premier aspect, l'invention propose un dispositif de fixation d'un tronçon de chemin de câbles sur un support, le dispositif comprenant un corps central défini par une surface supérieure, une surface inférieure et une surface latérale, et comprenant au moins deux pattes en saillie sur la surface latérale du corps central. Le corps central est muni d'une rainure centrale s'étendant à partir de la surface inférieure vers la surface supérieure et traversant la surface latérale du corps central depuis un côté avant jusqu'à un côté arrière et de deux rainures périphériques, s'étendant depuis la rainure centrale jusqu'à la surface latérale selon deux directions opposées, une première rainure périphérique partant du côté avant vers le côté arrière, la deuxième rainure périphérique partant du côté arrière vers le côté avant.

On obtient ainsi de manière simple et rapide la fixation d'un tronçon de chemins de câbles en treillis de fils sur un support en faisant glisser un fil du tronçon dans la rainure centrale, puis, par rotation du dispositif, dans les rainures périphériques. Conjointement, lors de la même rotation, les pattes peuvent glisser sous une portion extrême du support, de manière à coincer le dispositif à la fois sur le tronçon et sur le support.

Avantageusement, les rainures périphériques décrivent chacune un angle de 90° sur la surface latérale, de sorte que le blocage du tronçon est obtenu par une rotation à 90°, soit un quart de la tour, du dispositif.

Selon le mode de réalisation préféré, les pattes présentent chacune une face inférieure dans le prolongement de la surface inférieure du corps central, les rainures périphériques étant disposées entre les pattes et la surface supérieure.

De préférence, les pattes présentent une face supérieure comprenant une portion inclinée de la surface inférieure vers la surface supérieure du corps central.

Ainsi, la portion inclinée des pattes facilite le glissement de la portion extrême des ailes du support sur les pattes, et permet en outre d'obtenir un serrage progressif.

De préférence, les rainures périphériques comprennent une paroi inférieure inclinée de la surface inférieure vers la surface supérieure du corps central, facilitant le glissement du fil du tronçon dans les rainures périphériques lors de la rotation du dispositif.

Les pattes sont par exemple alignées et en saillie dans deux directions opposées, de manière à s'adapter sur un support à ailes parallèles.

Selon le mode de réalisation préféré, la rainure centrale est orientée à 90° par rapport aux pattes, de sorte que la direction générale d'élancement du tronçon peut être perpendiculaire à la direction générale d'élancement du support, conformément à la plupart des installations de chemins de câbles.

Selon un deuxième aspect, l'invention propose un chemin de câbles comportant un tronçon de chemin de câbles en treillis de fils et un support, le support présentant un profil transversal en C comprenant deux ailes présentant chacune une portion extrême supérieure repliée à 90° formant rebord, le tronçon de chemins de câbles étant fixé au support au moyen du dispositif de fixation présenté ci-dessus.

Le chemin de câbles ainsi formé est peu coûteux et résistant aux contraintes mécaniques aussi bien statiques que dynamiques.

Selon un troisième aspect, l'invention propose un procédé d'assemblage d'un chemin de câbles tel que présenté ci-dessus, le procédé comprenant les étapes suivantes :
- mise en contact du tronçon avec le rebord des ailes du support,
- insertion d'un fil du tronçon dans la rainure centrale du dispositif de fixation, les pattes s'étendant entre les ailes du support,
- rotation du dispositif de fixation, les pattes se plaçant contre les portions extrêmes supérieures des ailes du support, le fil du tronçon glissant dans les rainures périphériques.

Le procédé ainsi mis en oeuvre permet d'obtenir rapidement une liaison entre le tronçon et el support, un opérateur seul pouvant manipuler le dispositif, et sans nécessité d'outillage ni de visserie supplémentaires.

Avantageusement, le fil du tronçon est un fil de chaîne, de sorte que pour un même tronçon, un même fil de chaîne est solidarisé à plusieurs supports au moyen des dispositifs présentés, pour garantir la bonne tenue mécanique du tronçon sur les supports.

D'autres objets et avantages de l'invention apparaîtront à la lumière de la description faite ci-après en référence aux dessins annexés dans lesquels :
- la figure 1 est une vue de face d'un dispositif de fixation d'un tronçon de chemin de câbles sur un support ;
- la figure 2 est une vue de côté du dispositif de la figure 1 ;
- la figure 3 est une vue en perspective du dispositif des figures 1 et 2 ;
- la figure 4 est une vue en perspective illustrant un support, un tronçon de chemin de câbles et le dispositif de fixation, dans une position non assemblée ;
- la figure 5 est une vue de face de l'ensemble de la figure 4;
- la figure 6 est une vue de face similaire à la figure 5, l'ensemble étant dans une première position intermédiaire d'assemblage ;
- la figure 7 est une vue de face similaire à la figure 6, l'ensemble étant dans une deuxième position intermédiaire d'assemblage ;
- la figure 8 est une vue de détail d'une coupe selon la direction transversale à la direction d'élancement du support de l'ensemble de la figure 7 ;
- la figure 9 est une vue de face similaire à la figure 4, l'ensemble étant dans une position finale d'assemblage ;
- la figure 10 est une vue en coupe selon la direction d'élancement du support de l'ensemble de la figure 9 ;
- la figure 11 est une vue de détail d'une coupe selon la direction transversale à la direction d'élancement du support de l'ensemble de la figure 9.

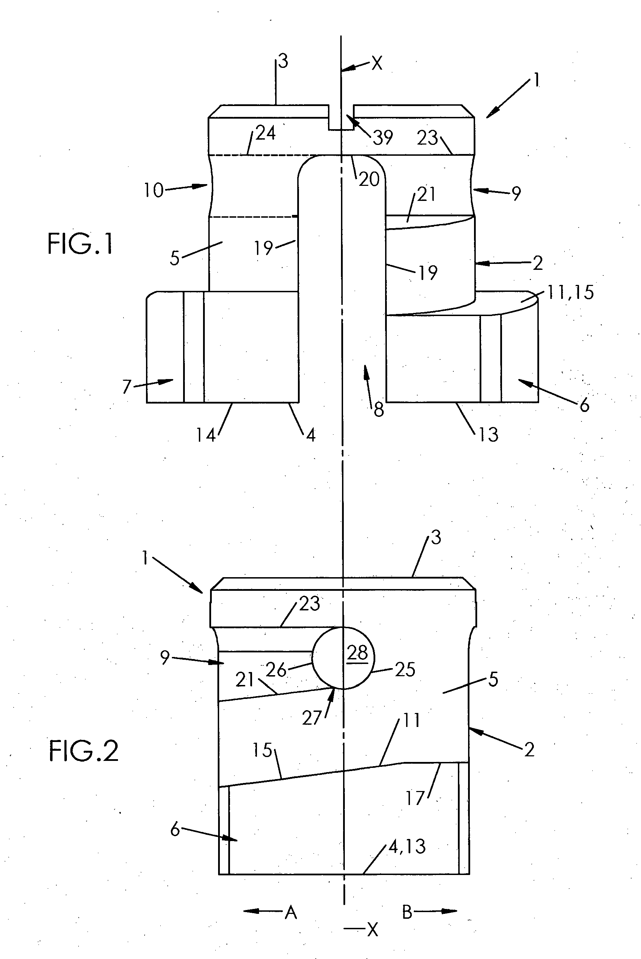

Sur les figures 1 à 3 en particulier, il est représenté un dispositif 1 de fixation de tronçons de chemins de câbles sur leur support.

Le dispositif 1 se présente sous forme d'une pièce monobloc, et peut être réalisé en toute matière, comme le métal ou le plastique.

Le dispositif 1 comprend un corps 2 central défini par une surface 3 supérieure, une surface 4 inférieure et une surface 5 latérale.

Le dispositif 1 comprend également au moins deux pattes 6, 7 en saillie sur la surface 5 latérale du corps 2 central.

Le corps 2 central est muni d'une rainure 8 centrale, s'étendant depuis la surface 4 inférieure vers la surface 3 supérieure, et traversant la surface 5 latérale depuis un côté A avant jusqu'à un côté B arrière du dispositif 1.

Dans ce qui suit, les termes « avant » et « arrière » seront employés par commodité, sans que l'emploi de ces expressions n'implique une orientation limitative du dispositif 1 sur les tronçons de chemins de câbles.

Le corps 2 central est en outre muni de deux rainures 9, 10 périphériques, s'étendant depuis la rainure 8 centrale vers la surface 5 latérale, et s'étendant selon deux directions opposées. Plus précisément, une première rainure 9 périphérique s'étendant depuis le côté A avant à partir de la rainure 8 centrale vers le côté B arrière, tandis que la deuxième rainure 10 périphérique s'étend depuis le côté B arrière à partir de la rainure 8 centrale vers le côté avant A.

Selon le mode de réalisation préféré qui va maintenant être décrit, le dispositif 1 présente une symétrie par rapport à un axe X.

Ainsi, le corps 2 central est-il sensiblement cylindrique de révolution autour de l'axe X de symétrie.

Selon le mode de réalisation préféré, les deux pattes 6, 7 s'étendent toute les deux selon un même axe transversal perpendiculaire à l'axe X de symétrie. En d'autres termes, elles sont alignées l'une avec l'autre, mais elles sont orientées dans deux directions opposées sur l'axe transversal.

Les pattes 6, 7 en saillie sur la surface 5 latérale du corps 2 central sont placées dans le prolongement de la surface 4 inférieure du corps 2. Plus précisément, les pattes 6, 7 sont comprises chacune entre une face 11, 12 supérieure et une face 13, 14 inférieure, les faces 13, 14 inférieures étant coplanaires avec la surface 4 inférieure du corps 2.

Avantageusement, les faces 11, 12 supérieures des pattes 6, 7 comprennent chacune une portion 15, 16 inclinée, c'est-à-dire orientée de la surface 4 inférieure vers la surface 3 supérieure du corps 2 central, la portion 15, 16 inclinée étant prolongée par une portion 17, 18 droite sensiblement parallèle à la surface 3 supérieure et à la surface 4 inférieure du corps 2 central.

Ainsi, la face 11 supérieure d'une première patte 6 comprend depuis le côté A avant une portion 15 inclinée de la surface 4 inférieure du corps 2 vers la surface 3 supérieure, s'étendant vers le côté arrière B.

De même, la face 12 supérieure de la deuxième patte 7 comprend depuis le côté B arrière une portion 16 inclinée de la surface inférieure du corps vers la surface supérieure, s'étendant vers le côté A avant.

De préférence, les portions 17, 18 droites des ailes 6, 7 sont coplanaires.

La rainure 8 centrale sur le corps 2 traversant la surface 5 latérale du corps 2 s'étend, selon le mode de réalisation préféré, selon un diamètre du cylindre. Elle part en outre depuis la surface 4 inférieure vers la surface 3 supérieure, sans rejoindre cette dernière, de manière à présenter deux parois 19 de côté parallèles à l'axe X de symétrie et parallèles entre elles, reliées par une paroi 20 de fond.

Selon le mode de réalisation préféré, la rainure 8 centrale est orientée à 90° par rapport aux pattes 6, 7, c'est-à-dire que les parois 19 de côté de la rainure 8 centrale sont perpendiculaires à l'axe transversal des pattes 6, 7.

Selon le mode de réalisation préféré, les rainures 9, 10 périphériques, au nombre de deux, sont placées entres les pattes 6, 7 et la surface 3 supérieure du corps 2. Elles décrivent chacune sur la surface 5 latérale du corps 2 un angle de 90°, avantageusement autour de l'axe X de symétrie. Elles s'étendent d'une part depuis la paroi 20 de fond de la rainure 8 centrale jusqu'à la surface 5 latérale du corps 2, et d'autre part elles s'étendent dans deux directions opposées, comme déjà mentionné précédemment, de sorte qu'elles ne se rejoignent pas. Chaque rainure 9, 10 périphérique est ainsi définie entre une paroi 21, 22 inférieure, une paroi 23, 24 supérieure et une paroi 25, 26 de fond.

Avantageusement, comme il sera vu plus loin, les parois 21, 22 inférieures des rainures 9, 10 périphériques sont inclinées. Plus précisément, la paroi 21 inférieure de la première rainure 9, s'étendant depuis le côté A avant à partir de la rainure 8 centrale, est orientée, depuis le côté A avant, de la surface 4 inférieure vers la surface 3 supérieure du corps 2 central. De même, la paroi 22 inférieure de la deuxième rainure 10, s'étendant depuis le côté B arrière à partir de la rainure 8 centrale, est orientée, depuis le côté B arrière, de la surface 4 inférieure vers la surface 3 supérieure du corps 2.

On pourra choisir l'inclinaison de la paroi 21, 22 inférieure des rainures 9, 10 périphériques sensiblement identique à celle de la portion 15, 16 inclinée des pattes 6, 7. Ainsi, la paroi 21 inférieure de la première rainure 9 est-elle sensiblement parallèle à la portion 15 inclinée de la première patte 6 et la paroi 22 inférieure de la deuxième rainure 10 périphérique est-elle sensiblement parallèle à la portion 16 incliné de la deuxième patte 7.

De préférence, la paroi 25, 26 de fond de chaque rainure 9, 10 périphérique forme un décrochement 27, 28 avec la paroi 21, 22 inférieure de la rainure 9, 10 périphérique.

Dès lors, la paroi 20 de fond de la rainure 8 centrale et la paroi 19, 20 de fond des rainures 9, 10 périphériques forment une ouverture 28 sensiblement circulaire traversant le diamètre du corps 2 (visible notamment sur la figure 2), de manière à fournir un logement pour un fil d'un tronçon de chemins de câbles.

Il va maintenant être décrit l'assemblage d'un chemin 29 de câbles par fixation des tronçons 30 de chemin de câbles sur un support 31. Dans la suite, il ne sera décrit que la fixation d'un tronçon 30 sur un support 31, étant entendu qu'un chemin 29 de câbles est en général formé d'une pluralité de tronçons fixés sur un support.

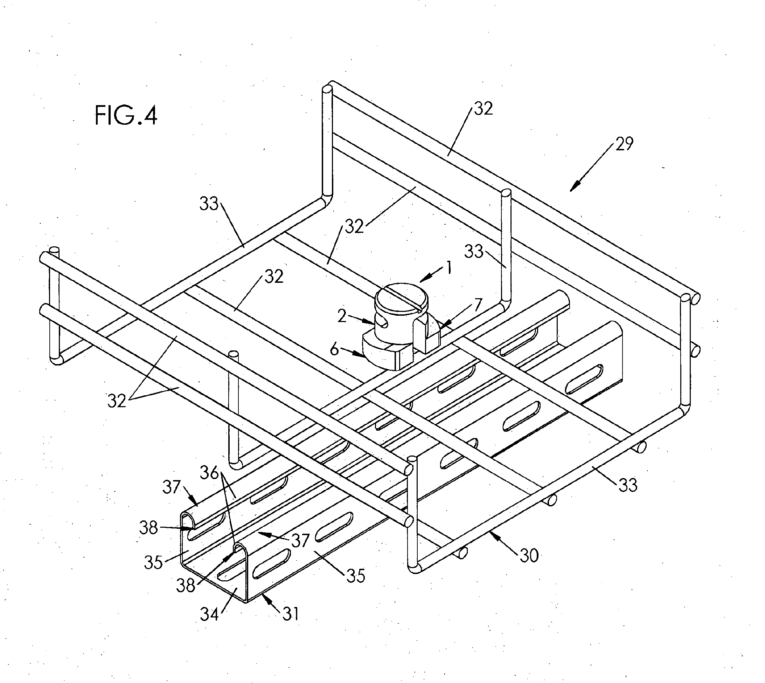

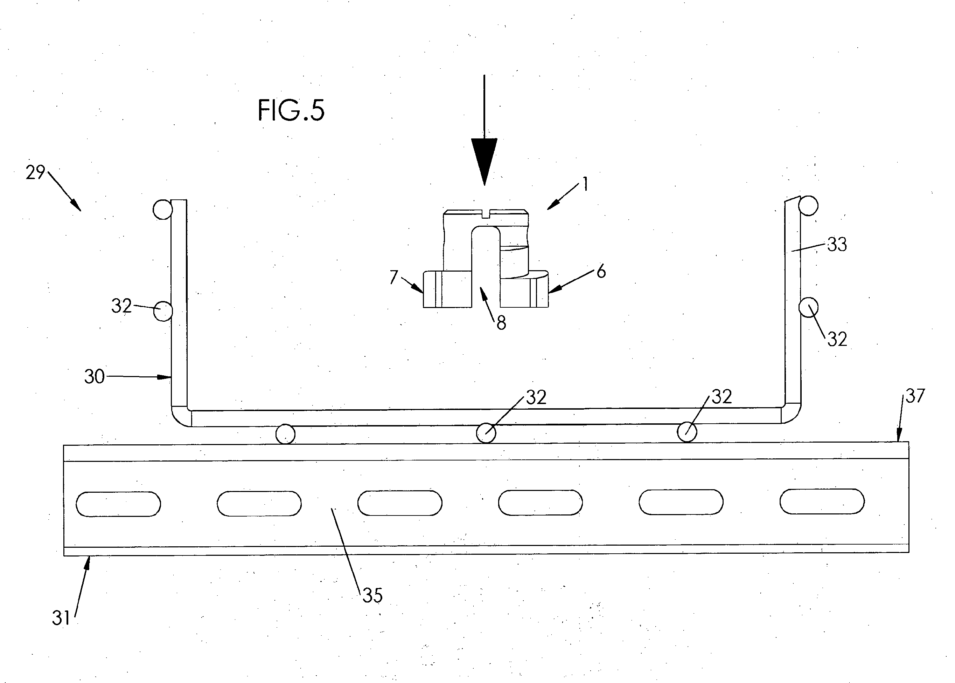

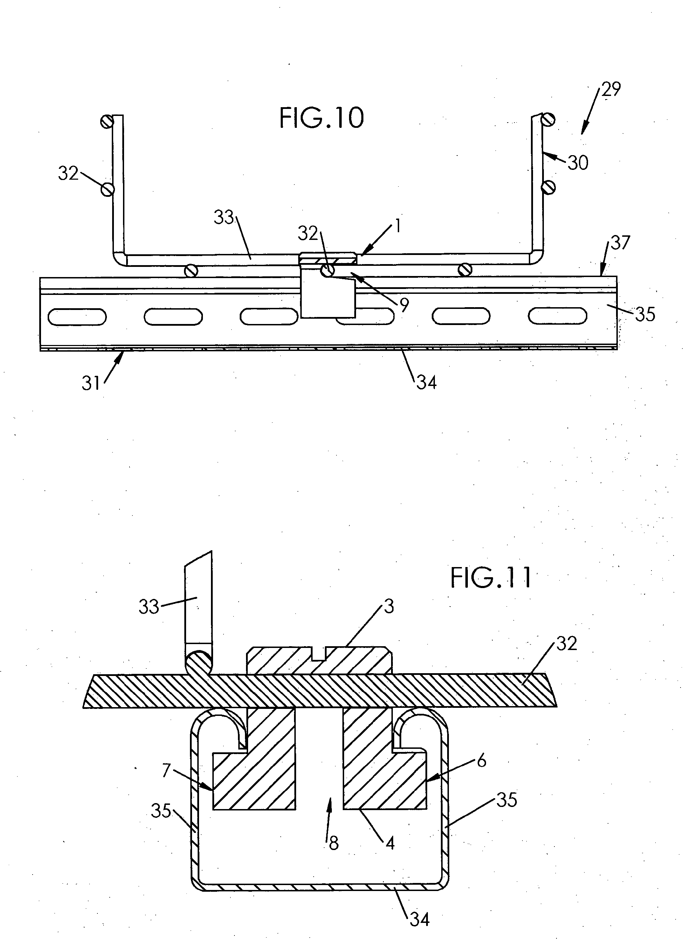

Le tronçon 30 est, comme représenté partiellement sur les figures 4 à 11 , en treillis de fils, c'est-à-dire qu'il est formé d'un maillage de fils 32 longitudinaux, dits de chaîne, et de fils 33 transversaux, dits de trame. La section transversale des fils 32, 33 est de préférence sensiblement circulaire.

Le support 31 se présente sous la forme d'un profilé de section transversale en forme de C. Le support 31 comprend ainsi un fond 34 et deux ailes 35, s'élevant sensiblement à 90° à partir du fond 34, entre lesquelles est défini l'intérieur du support 31. Une portion 36 extrême supérieure des ailes 35 est alors repliée à 90° vers l'intérieur du support de sorte que chaque aile 35 présente une portion 37 formant rebord vers l'intérieur du support 31, et qui forment ensemble surface d'appui pour le tronçon 30.

Selon le mode de réalisation préféré, comme illustré sur les figures, la portion 36 extrême supérieure de chaque aile est repliée à 180° vers l'intérieur du support 31. On pourra toutefois se contenter de replier la portion 36 extrême des ailes à 90° uniquement.

Chaque rebord 37 présente une épaisseur qui peut être définie comme étant la dimension transversale de la portion 36 extrême. Ainsi, selon le mode de réalisation préféré, l'épaisseur du rebord 37 d'une aile 35 correspond à la distance mesurée entre l'extrémité 38 libre de l'aile 35 et la surface d'appui. Selon le mode dans lequel la portion 36 extrême est repliée à 90°, l'épaisseur des rebords 37 correspond à l'épaisseur de la portion 36 extrême repliée.

On prendra soin de dimensionner le dispositif 1 de sorte que :
- la dimension entre les pattes 6, 7 mesurée selon le diamètre du corps 2 soit supérieure à l'épaisseur des rebords 37 des ailes 35 ;
- la distance, mesurée sur le logement 28 pour le fil du tronçon, entre la face 11, 12 supérieure des pattes 6, 7 du dispositif, plus précisément entre la portion 16, 17 droite des pattes 6, 7, et la paroi 21, 22 inférieure des rainures périphériques, soit légèrement inférieure à la distance entre l'extrémité libre des ailes et la surface d'appui du support 31 ;
- la distance entre les parois 19 de côté de la rainure 8 centrale d'une part, et entre la paroi 21, 22 inférieure et la paroi 23, 24 supérieure des rainures 9, 10 périphériques d'autre part soit supérieure ou égal au diamètre des fils 32 de chaîne du tronçon 30.

Le tronçon 30 est d'abord posé sur le support 31. Plus précisément, un fil du tronçon, par exemple un fil 32 de chaîne du fond du tronçon 30, est mis en contact avec la surface d'appui formée par les rebords 37 du support 31.

Selon le mode de réalisation préféré, dans lequel la rainure 8 centrale est orientée à 90° par rapport aux pattes 6, 7, le tronçon 30 est positionné perpendiculairement au support 31, c'est-à-dire que la direction d'élancement du tronçon 30 est perpendiculaire à celle du support 31. Il est cependant entendu qu'en adaptant l'angle entre la rainure 8 centrale et les pattes 6, 7, le tronçon pourra être positionné de manière quelconque sur le support 31.

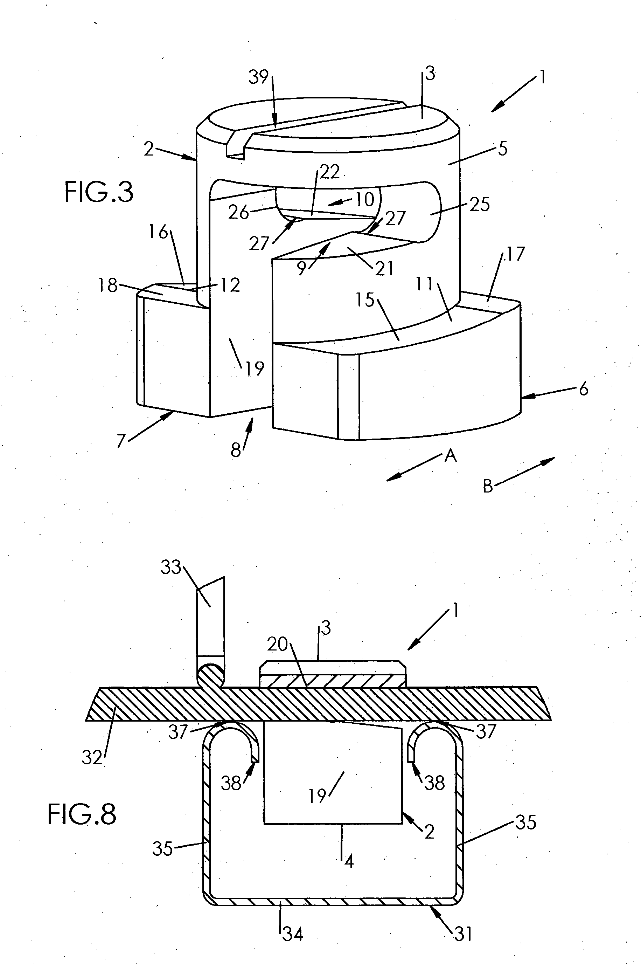

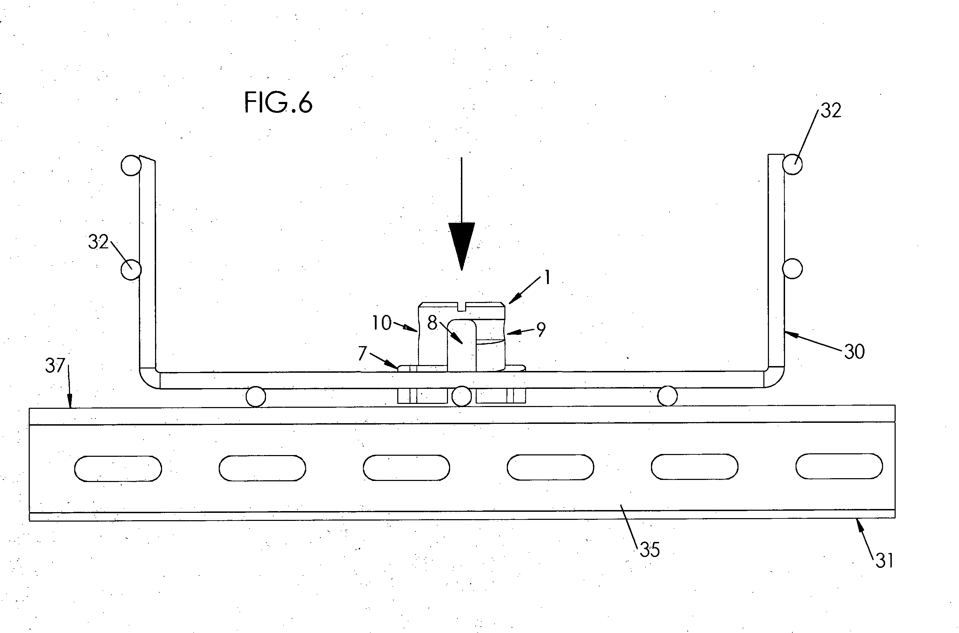

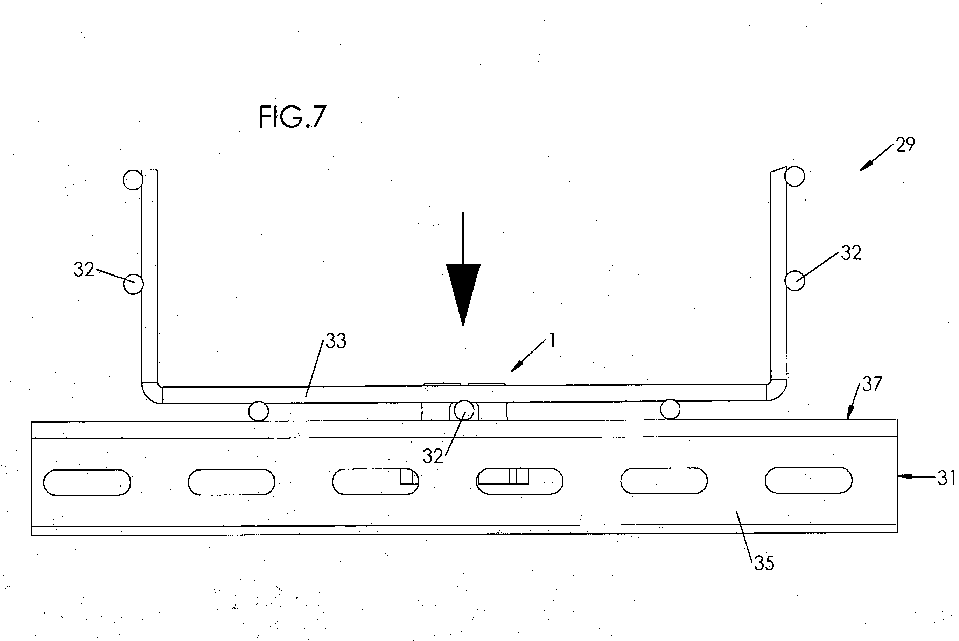

Le dispositif 1 est amené sur le tronçon 30, de sorte que le fil 32 de chaîne s'insère entre les parois 19 de côté de la rainure 8 centrale (figure 6), jusqu'à venir en butée avec la paroi 20 de fond de la rainure 8 centrale (figures 7 et 8). Les pattes 6, 7 passent alors entre les ailes 35 du support 31, et s'étendent à l'intérieur du support 31, l'axe transversal des pattes 6, 7 étant alors parallèle à la direction d'élancement du support 31.

Le dispositif 1 est alors pivoté de 90° autour de l'axe X de symétrie, de sorte que la portion 36 extrême de chaque ailes 35 glisse progressivement sur la portion 15, 16 inclinée d'une des pattes 6, 7 du dispositif 1, jusqu'à ce que la portion 17, 18 droite des pattes 6, 7 vienne en appui contre la portion 36 extrême des ailes 35.

De par les dimensions du dispositif 1, l'appui entre la portion 17, 18 droite des pattes 6, 7 et la portion 36 extrême des ailes 35 est obtenu en pivotant à force le dispositif 1. Avantageusement, le dispositif 1 est muni de moyens pour faciliter sont pivotement au moyen d'un outil. Par exemple, la surface 3 supérieure du corps 2 comprend une fente 39 pour l'insertion d'un outil de type tournevis, facilitant le pivotement à force du dispositif 1. En variante, le corps 2 du dispositif comprend deux fentes, ou encore une forme hexagonale, mâle ou femelle, permettant d'utiliser par exemple une clé.

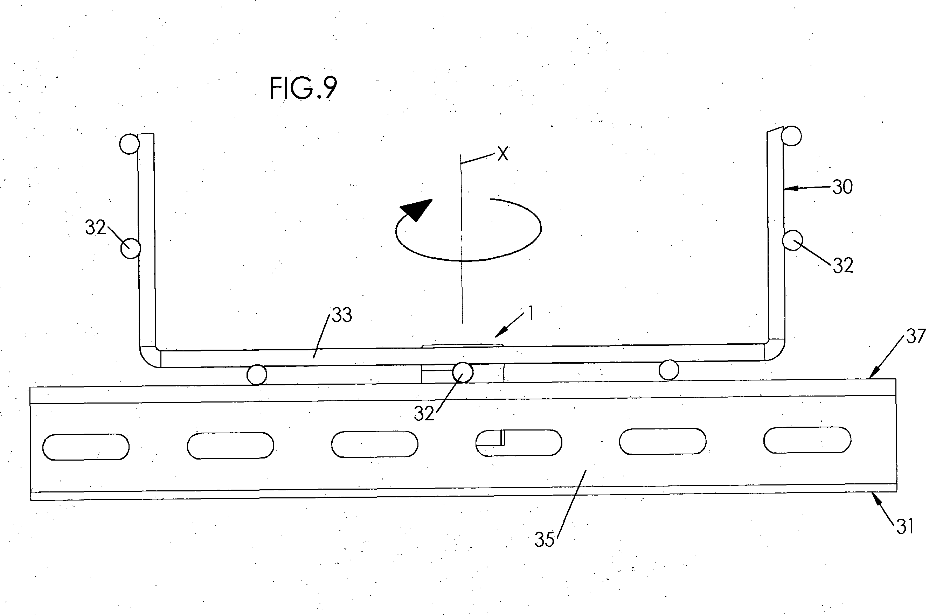

Conjointement, le fil 32 de chaîne du tronçon 30 est guidé par les parois 21, 22 inférieures inclinées des rainures 9, 10 périphériques jusqu'à la paroi 25, 26 de fond de ces rainures 9, 10, de sorte que le fil 32 est bloqué dans le logement (figures 9 à 11 ).

Il en résulte une solidarisation du tronçon 30 sur le support 31. En effet, le dispositif 1 est bloqué à la fois sur le tronçon 30 par le fil 32 de chaîne dans le logement 28 et par l'appui des pattes 6, 7 sur les portions 36 extrêmes des ailes 35 du support 31.

Seul un pivotement inverse permet de faire sortir le fil 32 du tronçon 30 du logement 28 pour désolidariser le tronçon 30 et son support 31. Or, la force déployée pour pouvoir faire pivoter le dispositif 1 est suffisante pour empêcher toute désolidarisation involontaire. Par ailleurs, le décrochement 27 entre la paroi 25, 26 de fond des rainures 9, 10 périphériques et leur paroi 21, 22 inférieure limite les déplacements involontaires du fil 32 dans le logement 28 du dispositif 1.

Afin d'augmenter la tenue du dispositif 1 sur le tronçon 30, les rainures 9, 10 périphériques peuvent avoir un état de surface particulier, augmentant les frottements contre le fil longitudinal 32 du tronçon 30. Plus précisément, leurs parois 21, 22 inférieures et leurs parois 23, 24 supérieures peuvent être crantée, de manière à augmenter le frottement contre le fil 32 longitudinal du tronçon 30. Ainsi, le risque que le fil 32 longitudinal ne sorte du logement 28 du dispositif 1, par exemple sous l'effet de vibrations, s'en trouve réduit.

De même, afin d'augmenter la tenue du dispositif 1 sur le support 31, la face 11, 12 supérieure des pattes 6, 7 peut être travaillée de manière à obtenir un état de surface particulier, augmentant les frottements au contact avec les ailes 35 du support 31. Par exemple, les portions 15, 16 inclinées des pattes 6, 7 peuvent être crantées, de manière à diminuer le risque que le dispositif 1 ne pivote dans le sens propre à le désolidariser du support 31. On pourra également crantée les portions 36 extrêmes des ailes 35, et par exemple on pourra crantée l'extrémité 38 libre des ailes 35 en contact avec la portion 17, 18 droite des pattes 6, 7 sur les figures, toujours dans le but d'augmenter les frottements et diminuer le risque de désolidarisation.

Le dispositif 1 ainsi obtenu permet de fixer rapidement, sans outil, le tronçon 30 sur le support 31, tout en assurant une bonne résistance aux contraintes statiques et dynamiques subies par le chemin 29 de câbles.

Le dispositif 1 est simple de fabrication et peu coûteux.

Le désassemblage du tronçon 30 sur le support 31 se fait également rapidement, de sorte qu'il est aisé de remplacer un unique tronçon 30, par exemple abîmé ou usé, sans déplacer les autres tronçons 30 du chemin 29 de câbles.

Le dispositif 1 permet de fixer le tronçon 30 selon toute configuration, le support 31 pouvant être orienté verticalement aussi bien qu'horizontalement.

## Revendications

1. Dispositif (**1**) de fixation d'un tronçon (**30**) de chemin (**29**) de câbles sur un support (**31**), le dispositif (**1**) comprenant un corps (**2**) central défini par une surface (**3**) supérieure, une surface (**4**) inférieure et une surface (**5**) latérale, le corps (**2**) central étant muni d'une rainure (**8**) centrale s'étendant à partir de la surface (**4**) inférieure vers la surface (**3**) supérieure et traversant la surface (**5**) latérale du corps (**2**) central depuis un côté (**A**) avant jusqu'à un côté (**B**) arrière et de deux rainures (**9**, **10**) périphériques, s'étendant depuis la rainure (**8**) centrale jusqu'à la surface (**5**) latérale selon deux directions opposées, une première rainure (**9**) périphérique partant du côté (**A**) avant vers le côté (**B**) arrière, la deuxième rainure (**10**) périphérique partant du côté (**B**) arrière vers le côté (**A**) avant, le dispositif (**1**) étant **caractérisé en ce qu'**il comprend au moins deux pattes **(6**, **7**) en saillie sur la surface (**5**) latérale du corps (**2**) central.

2. Dispositif (**1**) de fixation selon la revendication 1, dans lequel les rainures (**9**, **10**) périphériques décrivent chacune un angle de 90° sur la surface (**5**) latérale.

3. Dispositif (**1**) de fixation selon la revendication 1 ou la revendication 2, dans lequel les pattes (**6**, **7**) présentent chacune une face (**13**, **14**) inférieure dans le prolongement de la surface (**4**) inférieure du corps (**2**) central, les rainures (**9**, **10**) périphériques étant disposées entre les pattes (**6**, **7**) et la surface (**3**) supérieure.

4. Dispositif **(1**) de fixation selon l'une quelconque des revendications précédentes, dans lequel les pattes (**6**, **7**) présentent une face (**11**, **12**) supérieure comprenant une portion (**15**, **16**) inclinée de la surface (**4**) inférieure vers la surface (**3**) supérieure du corps (**2**) central.

5. Dispositif (**1**) de fixation selon l'une quelconque des revendications précédentes, dans lequel les rainures (**9**, **10**) périphériques comprennent une paroi (**21**, **22**) inférieure inclinée de la surface (**4**) inférieure vers la surface (**3**) supérieure du corps (**2**) central.

6. Dispositif (**1**) de fixation selon l'une quelconque des revendications précédentes, dans lequel les pattes **(6**, **7**) sont alignées et en saillie dans deux directions opposées.

7. Dispositif (**1**) selon la revendication 6, dans lequel la rainure (**8**) centrale est orientée à 90° par rapport aux pattes **(6**, **7**).

8. Chemin (**29**) de câbles comportant un tronçon (30) de chemin de câbles en treillis de fils et un support (**31**), le support (**31**) présentant un profil transversal en C comprenant deux ailes (**35**) présentant chacune une portion (**36**) extrême supérieure repliée à 90° formant rebord (**37**), le tronçon (**30**) de chemins de câbles étant fixé au support (**31**) au moyen du dispositif (**1**) de fixation selon l'une des revendications 1 à 7.

9. Procédé d'assemblage d'un chemin (**29**) de câbles selon la revendication 8, le procédé comprenant les étapes suivantes :
- mise en contact du tronçon (**30**) avec le rebord (**37**) des ailes (**35**) du support (**31**),
- insertion d'un fil (**32**) du tronçon (**30**) dans la rainure (**8**) centrale du dispositif (**1**) de fixation, les pattes (**6**, **7**) s'étendant entre les ailes (**35**) du support (**30**),
- rotation du dispositif (**1**) de fixation, les pattes (**6**, **7**) se plaçant contre les portions (**36**) extrêmes supérieures des ailes (**35**) du support (31), le fil du tronçon (**30**) glissant dans les rainures (**9**, **10**) périphériques.

10. Procédé d'assemblage selon la revendication 9, dans lequel le fil (**32**) du tronçon (**30**) est un fil de chaîne.

## Patentansprüche

1. Vorrichtung (1) zur Befestigung eines Abschnitts (30) eines Kabelbaums (29) auf einer Halterung (31), wobei die Vorrichtung (1) einen zentralen Körper (2) umfasst, der durch eine Oberseite (3), eine Unterseite (4) und eine Seitenfläche (5) definiert ist, wobei der zentrale Körper (2) mit einer zentralen Nut (8), die sich von der Unterseite (4) zu der Oberseite (3) erstreckt und die Seitenfläche (5) des zentralen Körpers (2) von einer vorderen Seite (A) bis zu einer hinteren Seite (B) quert, und mit zwei Umfangsnuten (9, 10) versehen ist, die sich von der zentralen Nut (8) bis zur Seitenfläche (5) in zwei entgegengesetzte Richtungen erstrecken, wobei eine erste Umfangsnut (9) von der vorderen Seite (A) zur hinteren Seite (B) weggeht, wobei die zweite Umfangsnut (10) von der hinteren Seite (B) zu der vorderen Seite (A) weggeht, wobei die Vorrichtung (1) **dadurch gekennzeichnet ist, dass** sie mindestens Befestigungseisen (6, 7) umfasst, die auf der Seitenfläche (5) des zentralen Körpers (2) herausragen.

2. Befestigungsvorrichtung (1) nach Anspruch 1, bei der die Umfangsnuten (9, 10) jeweils einen Winkel von 90° auf der Seitenfläche (5) beschreiben.

3. Befestigungsvorrichtung (1) nach Anspruch 1 oder Anspruch 2, bei der die Befestigungseisen (6, 7) jeweils eine Unterseite (13, 14) in der Verlängerung der Unterseite (4) des zentralen Körpers (2) aufweisen, wobei die Umfangsnuten (9, 10) zwischen den Befestigungseisen (6, 7) und der Oberseite (3) angeordnet sind.

4. Befestigungsvorrichtung (1) nach, einem der vorhergehenden Ansprüche, bei der die Befestigungseisen (6, 7) eine Oberseite (11, 12) aufweisen, umfassend einen geneigten Abschnitt (15, 16) der Unterseite (4) zur Oberseite (3) des zentralen Körpers (2).

5. Befestigungsvorrichtung (1) nach einem der vorhergehenden Ansprüche, bei der die Umfangsnuten (9, 10) eine untere geneigte Wand (21, 22) von der Unterseite (4) zur Oberseite (3) des zentralen Körpers (2) umfassen.

6. Befestigungsvorrichtung (1) nach einem der vorhergehenden Ansprüche, bei der die Befestigungseisen (6, 7) ausgerichtet und in beide entgegensetzte Richtungen herausragend sind.

7. Vorrichtung (1) nach Anspruch 6, bei der die zentrale Nut (8) 90° in Bezug zu den Befestigungseisen (6, 7) ausgerichtet ist.

8. Kabelbaum (29), umfassend einen Kabelbaumabschnitt (30) aus Drahtgeflecht und eine Halterung (31), wobei die Halterung (31) ein C-förmiges Querprofil aufweist, umfassend zwei Schenkel (35), die jeweils einen um 90° umgelegten oberen äußeren Abschnitt (36), der einen Rand (37) bildet, aufweisen, wobei der Kabelbaumabschnitt (30) an der Halterung (31) mit Hilfe der Befestigungsvorrichtung (1) nach einem der Ansprüche 1 bis 7 befestigt ist.

9. Verfahren zum Zusammenbau eines Kabelbaums (29) nach Anspruch 8, wobei das Verfahren die folgenden Schritte umfasst:
- Herstellen eines Kontakts zwischen dem Abschnitt (30) und dem Rand (37) der Schenkel (35) der'Halterung (31),
- Einsetzen eines Drahtes (32) des Abschnitts (30) in die zentrale Nut (8) der Befestigungsvorrichtung (1), wobei sich die Befestigungseisen (6, 7) zwischen den Schenkeln (35) der Halterung (30) erstrecken,
- Drehen der Befestigungsvorrichtung (1), wobei sich die Befestigungseisen (6, 7) an die oberen äußeren Abschnitte (36) der Schenkel (35) der Halterung (31) anlegen, wobei der Draht des Abschnitts (30) in die Umfangsnuten (9, 10) gleitet.

10. Verfahren zum Zusammenbau nach Anspruch 9, wobei der Draht (32) des Abschnitts (30) ein Kettdraht ist.

## Claims

1. Device (1) for fixing a cable-tray (29) section (30) to a support (31), the device (1) comprising a central body (2) defined by an upper surface (3), a lower surface (4) and a lateral surface (5), the central body (2) being provided with a central slot (8) extending from the lower surface (4) towards the upper surface (3) and traversing the lateral surface (5) of the central body (2) from a front side (A) to a rear side (B), and with two peripheral slots (9, 10) extending from the central slot (8) to the lateral surface (5) in two opposite directions, a first peripheral slot (9) starting from the front side (A) towards the rear side (B), the second peripheral slot (10) starting from the rear side (B) towards the front side (A), the device (1) being **characterized in that** it comprises at least two lugs (6, 7) projecting from the lateral surface (5) of the central body (2).

2. Fixing device (1) according to Claim 1, in which the peripheral slots (9, 10) each describe an angle of 90° on the lateral surface (5).

3. Fixing device (1) according to Claim 1 or Claim 2, in which the lugs (6, 7) each have a lower face (13, 14) in the continuation of the lower surface (4) of the central body (2), the peripheral slots (9, 10) being arranged between the lugs (6, 7) and the upper surface (3) .

4. Fixing device (1) according to any one of the preceding claims, in which the lugs (6, 7) have an upper face (11, 12) comprising a portion (15, 16) which is inclined from the lower surface (4) towards the upper surface (3) of the central body (2).

5. Fixing device (1) according to any one of the preceding claims, in which the peripheral slots (9, 10) comprise a lower wall (21, 22) which is inclined from the lower surface (4) towards the upper surface (3) of the central body (2).

6. Fixing device (1) according to any one of the preceding claims, in which the lugs (6, 7) are aligned and project in two opposite directions.

7. Device (1) according to Claim 6, in which the central slot (8) is oriented at 90° with respect to the lugs (6, 7).

8. Cable tray (29) comprising a cable-tray section (30) in the form of a wire lattice and a support (31), the support (31) having a C-shaped transverse profile comprising two wings (35) each having an upper end portion (36) folded at 90° to form a rim (37), the cable-tray section (30) being fixed to the support (31) by means of the fixing device (1) according to one of Claims 1 to 7.

9. Method for assembling a cable tray (29) according to Claim 8, the method comprising the following steps:
- bringing the section (30) into contact with the rim (37) of the wings (35) of the support (31),
- inserting a wire (32) of the section (30) into the central slot (8) of the fixing device (1), the lugs (6, 7) extending between the wings (35) of the support (30),
- rotating the fixing device (1), the lugs (6, 7) being placed against the upper end portions (36) of the wings (35) of the support (31), the wire of the section (30) sliding into the peripheral slots (9, 10).

10. Assembly method according to Claim 9, in which the wire (32) of the section (30) is a warp wire.
